# EUROPÄISCHE PATENTANMELDUNG

(11) **EP 1 231 135 A2**
(43) Veröffentlichungstag der Anmeldung: **14.08.2002**
(21) Anmeldenummer: 02000333.1
(22) Anmeldetag: 04.01.2002
(51) Int. Cl.: B62K 27/02

(54) **Seitenwagen für Motorräder**

(30) Priorität: 07.02.2001 DE 10105461
(71) Anmelder: Bayerische Motoren Werke Aktiengesellschaft, 80809 München (DE)
(72) Erfinder: Nurtsch, Bernd, 83555 Gars (DE); Helm, Detlef, 86567 Hilgertshausen (DE)

(57) **Zusammenfassung**

Die Erfindung betrifft einen Seitenwagen für Motorräder, umfassend einen Rahmen mit Befestigungspunkten zur Befestigung an einem Motorradrahmen. Der Seitenwagen ist dadurch gekennzeichnet, daß der Rahmen als Sicherheitszelle (1) ausgebildet ist, daß ein Rückhaltesystem (10) für den Insassen (6) vorgesehen ist, und daß vorn und hinten an der Sicherheitszelle (1) Knautschzonen (2,3) angeordnet sind.

## Beschreibung

Die Erfindung betrifft einen Seitenwagen für Motorräder, umfassend einen Rahmen mit Befestigungspunkten zur Befestigung an einem Motorradrahmen.

Heutige Seitenwagen sind für den Transport einer oder mehrerer Personen und/oder Gepäck konzipiert. Leichtbau und einfache Bauweise spielen bei den meisten konstruktiven Lösungen die entscheidende Rolle. Dabei stellt der Rahmen des Seitenwagens, der das Fahrwerk, den Aufbau und gegebenenfalls Zusatztanks abstützt, die tragende Struktur des Seitenwagens dar. Zur Verbesserung der Sicherheit des Insassens wurden zwar bereits die Verwendung einer besonderen Polsterung, eines Anschnallgurtes sowie eines Überrollbügels vorgeschlagen. Die bekannten Maßnahmen sind aber ungeeignet, den Insassen des Seitenwagens im Falle eines Aufpralls bei höherer Geschwindigkeit gegen Verletzungen zu schützen. Die Überlebenschance eines Motorradaufsassens im Falle eines Aufpralls hängt entscheidend davon ab, wie er sich von der Maschine löst, das Hindernis gegebenenfalls überfliegt und wie der anschließende Aufprall geschieht. Unabhängig davon, ob der Beiwagen offen oder geschlossen ist, verhindert die Sitzposition sowie die Lage des Schwerpunktes des aus dem Motorrad, dem Seitenwagen und dem Insassen gebildeten Gesamtsystems ein Lösen des Beifahrers vom Seitenwagen im Falle eines Aufpralls. Somit kann der Insasse des Seitenwagens einen Frontalaufprall mit einer Geschwindigkeit von mehr als 15 km/h nur überleben, wenn einerseits die kinetische Energie durch gezielte Deformation bei möglichst konstantem Kraftniveau absorbiert wird, und wenn andererseits Intrusionen in den Überlebensbereich (auch Fußbereich) verhindert werden. Bei einem herkömmlichen Seitenwagen liegt das einzige Bauteil, das diese Aufgabe übernehmen könnte, nämlich der Rahmen, zu tief, um Energie zu absorbieren und den Überlebensraum vor Intrusionen zu schützen. Die übrigen Bauteile, wie z. B. die Außenhaut, sind für diese Aufgabe nicht geeignet. Wenn der Seitenwagen bei normaler Fahrgeschwindigkeit gegen ein Hindernis prallt oder ein anderes Fahrzeug auf den Seitenwagen auffährt, dann sind schwere Verletzungen des Insassen nahezu unvermeidlich.

Der Erfindung liegt die Aufgabe zugrunde, einen Seitenwagen zu schaffen, der einen Insassen besser gegen mögliche Verletzungen schützt.

Erfindungsgemäß wird diese Aufgabe dadurch gelöst, daß der Rahmen als Sicherheitszelle ausgebildet ist, daß ein Rückhaltesystem für den Insassen vorgesehen ist, und daß vorne und hinten an der Sicherheitszelle Knautschzonen angeordnet sind. Diese drei konstruktiven Maßnahmen unterstützen sich gegenseitig, um den Insassen des Seitenwagens bei einem Unfall optimal zu schützen. Durch die Sicherheitszelle in Verbindung mit dem Rückhaltesystem wird der Insasse vor einem Aufprall gegen einen Fremdkörper geschützt. Dieser Schutz ist bei einem Aufprall von vorne, von hinten, von der Seite und von oben (Überschlag) gewährleistet. Die an der Sicherheitszelle vorne und hinten angeordneten Knautschzonen dienen zur Energieabsorption bzw. zur Verhinderung von Intrusionen. Durch diese Knautschzonen wird die Verformungsstrecke vergrößert, und die auf den Insassen des Seitenwagens einwirkenden Verzögerungskräfte werden entsprechend verringert. Die Erfindung beruht auf der Erkenntnis, daß es zum Schutz des Insassens eines Seitenwagens nicht ausreicht, diesen in einer verformungssteifen Sicherheitszelle anzuordnen, sondern daß darüber hinaus das Einwirken übermäßiger Verzögerungskräfte auf den Insassen verhindert werden muß. Die letztgenannte Forderung kann nur durch ein Rückhaltesystem in Verbindung mit einer Knautschzone mit definiertem Kraft-Weg-Verlauf (Verzögerungsstrecke ) erfüllt werden.

Um den Insassen des Seitenwagens auch im Falle eines Überschlags optimal zu schützen, ist vorgesehen, daß die Sicherheitszelle einen Überrollkäfig bildet.

Bei einer in konstruktiver Hinsicht besonders vorteilhaften Ausführungsform der Erfindung ist vorgesehen, daß die Sicherheitszelle ein verformungssteifes Stabwerk ist.

Vorzugsweise umfassen die Knautschzonen Deformationselemente, die auf die Höhe des Schwerpunktes des aus dem Motorrad, dem Seitenwagen und dem Insassen gebildeten Gesamtsystems abgestimmt sind.

Das Rückhaltesystem, das den Insassen des Seitenwagens gegen einen Aufprall an Teile der Sicherheitszelle schützt, kann einen Sicherheitsgurt und/oder einen Airbag umfassen.

Zum Schutz des Nackenbereichs des Insassen bei einem Auffahrunfall ist vorgesehen, daß der in der Sicherheitszelle angeordnete Sitz eine Kopfstütze aufweist.

Ein bevorzugtes Ausführungsbeispiel der Erfindung ist in den Zeichnungen dargestellt und wird nachfolgend näher erläutert. Es zeigt:

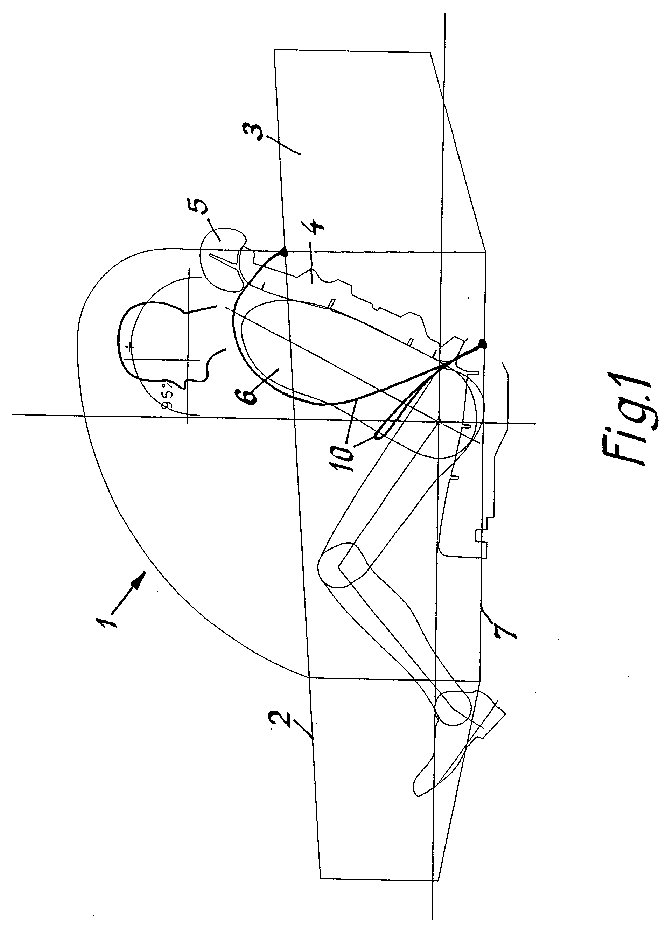

Fig. 1 eine schematische Seitenansicht eines Seitenwagens für Motorräder, und
Fig. 2 eine perspektivische Darstellung des Seitenwagens nach Fig. 1.

Ein Seitenwagen für Motorräder umfaßt eine Sicherheitszelle 1 und vordere und hintere Knautschzonen 2 und 3. Die Sicherheitszelle 1 ist mit (nicht gezeigten) Befestigungspunkten zur Befestigung an einem Motorradrahmen sowie mit einem (gleichfalls nicht gezeigten) Fahrwerk versehen. Ein Sitz 4 ist mit der Sicherheitszelle 1 fest verbunden. Mit der Lehne des Sitzes 4 ist eine Kopfstütze 5 integriert. Ein Insasse 6 des Seitenwagens ist nur schematisch dargestellt.

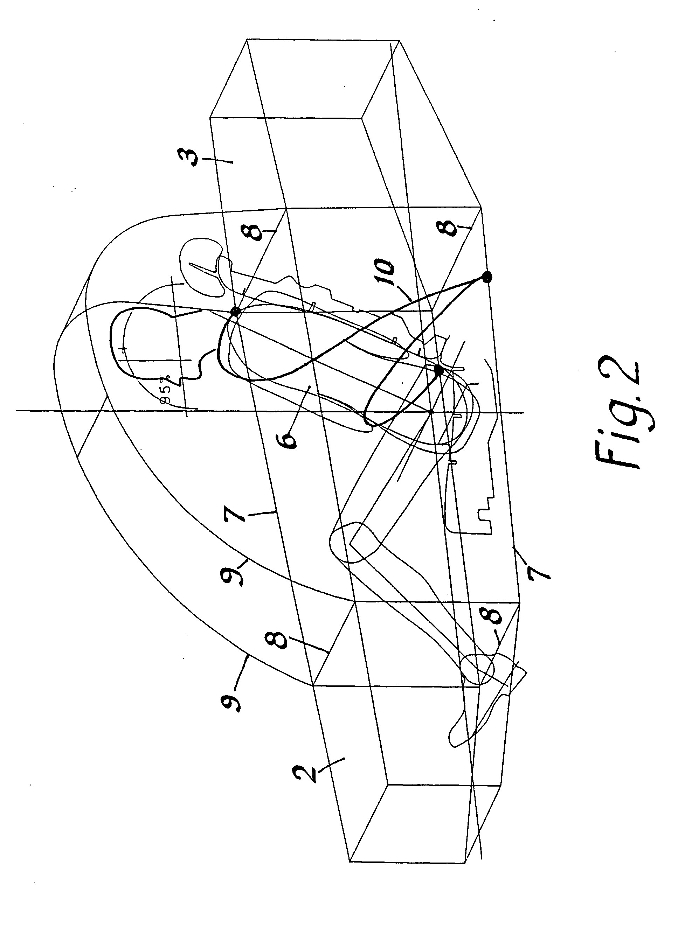

Wie aus Fig. 2 hervorgeht, besteht die Sicherheitszelle 1 aus einem verformungssteifen Stabwerk. Zu diesem Zweck sind zwei seitliche Rahmenteile 7 am vorderen und hinteren Ende durch obere und untere Querträger 8 miteinander verbunden. Ferner sind zwei U-förmige Holme 9 mit den beiden seitlichen Rahmenteilen 7 verbunden und durch Querträger 8 im Abstand gehalten. Es ist erkennbar, daß die seitlichen Rahmenteile 7 und die Holme 9 in Verbindung mit den Querträgern 8 einen den Insassen 6 aufnehmenden Überrollkäfig bilden. Die seitlichen Rahmenteile 7, die Querträger 8 und die Holme 9 bestehen aus Profilen aus einem Material mit hoher Dehnsteifigkeit. In Abhängigkeit vom Material können diese Profile miteinander verschraubt, vernietet, verschweißt oder verklebt sein. Das Material und der Querschnitt dieser Metallprofile kann so gewählt werden, daß bei einem geringen Gewicht eine hohe Verformungssteifigkeit der Sicherheitszelle 1 erreicht wird. Die beiden seitlichen Rahmenteile 7 sind mit einer (nicht gezeigten) Verkleidung versehen, die mechanisch hinreichend stabil ist, um bei einem Unfall Intrusionen zu verhindern. Zwischen den beiden Holmen 9 kann eine (nicht gezeigte) Windschutzscheibe angeordnet sein.

Um den Insassen 6 vor einem Aufprall an Teile der Sicherheitszelle 1 zu schützen, ist ein Rückhaltesystem vorgesehen, das aus einem schematisch dargestellten Sicherheitsgurt 10 besteht. Der als sogenannte Hosenträgergurt ausgebildete Sicherheitsgurt 10 ist in vier Punkten an der Sicherheitszelle 1 befestigt.

Die vordere und die hintere Knautschzone 2 und 3 können einteilig aus einem verformbaren Material hergestellt sein. Die beiden Knautschzonen 2 und 3 könnten aber auch aus mehreren Deformationselementen aufgebaut sein. In diesem Fall sollte eine Verkleidung zur Verhinderung von Intrusionen vorgesehen sein. Die einoder mehrteilig ausgebildete vordere und hintere Knautschzone 2 und 3 hat den Zweck, bei einem Aufprall des Seitenwagens oder bei einem Auffahrunfall kinetische Energie in Verformungsenergie umzuwandeln und dadurch die auf den Insassen 6 einwirkenden Beschleunigungskräfte zu verringern. Um diese Aufgabe optimal erfüllen zu können, sollten die Deformationselemente auf die Höhe des Schwerpunktes des aus dem Motorrad, dem Seitenwagen und dem Insassen gebildeten Gesamtsystems abgestimmt sein. Während die vordere Knautschzone 2 die Füße des Insassen 6 aufnimmt, kann die hintere Knautschzone 3 als Gepäckraum dienen.

Da der Insasse 6 durch den Sicherheitsgurt 10 in der Sicherheitszelle 1 stabil festgelegt ist und sein Kopf vor einem Aufprall geschützt ist, kann auf das Tragen eines Schutzhelms verzichtet werden. Zusätzlich zu dem Sicherheitsgurt 10 könnte zum Schutz des Insassen 6 auch noch ein Airbag in der Sicherheitszelle 1 angeordnet sein.

Es ist erkennbar, daß der Insasse 6 von der einen Überrollkäfig bildenden Sicherheitszelle 1 rundum geschützt ist. Die Sicherheitszelle bietet daher auch bei einem Überschlag, bei einem unfallbedingten Aufstellen des Gespanns sowie bei einem Abreißen des Seitenwagens vom Motorrad einen optimalen Schutz.

### Bezugszeichenliste:

- 1: Sicherheitszelle
- 2: vordere Knautschzone
- 3: hintere Knautschzone
- 4: Sitz
- 5: Kopfstütze
- 6: Insasse
- 7: seitliche Rahmenteile
- 8: Querträger
- 9: Holme
- 10: Sicherheitsgurt

## Patentansprüche

1. Seitenwagen für Motorräder, umfassend einen Rahmen mit Befestigungspunkten zur Befestigung an einem Motorradrahmen, **dadurch gekennzeichnet, daß** der Rahmen als Sicherheitszelle (1) ausgebildet ist, daß ein Rückhaltesystem (10) für den Insassen (6) vorgesehen ist, und daß vorn und hinten an der Sicherheitszelle (1) Knautschzonen (2, 3) angeordnet sind.

2. Seitenwagen nach Anspruch 1, **dadurch gekennzeichnet, daß** die Sicherheitszelle (1) einen Überrollkäfig bildet.

3. Seitenwagen nach Anspruch 1 oder 2, **dadurch gekennzeichnet, daß** die Sicherheitszelle (1) ein verformungssteifes Stabwerk (7, 8, 9) ist.

4. Seitenwagen nach einem der vorhergehenden Ansprüche, **dadurch gekennzeichnet, daß** die Knautschzonen (2, 3) Deformationselemente umfassen, die auf die Höhe des Schwerpunktes des aus dem Motorrad, dem Seitenwagen und dem Insassen gebildeten Gesamtsystems abgestimmt sind.

5. Seitenwagen nach einem der vorhergehenden Ansprüche, **dadurch gekennzeichnet, daß** das Rückhaltesystem (10) einen Sicherheitsgurt und/oder einen Airbag umfaßt.

6. Seitenwagen nach einem der vorhergehenden Ansprüche, **dadurch gekennzeichnet, daß** ein in der Sicherheitszelle (1) angeordneter Sitz (4) eine Kopfstütze (5) aufweist.
